# EUROPÄISCHE PATENTSCHRIFT

(11) **EP 0 982 336 B1**
(45) Veröffentlichungstag und Bekanntmachung des Hinweises auf die Patenterteilung: **03.11.2004**
(21) Anmeldenummer: 99115956.7
(22) Anmeldetag: 13.08.1999
(51) Int. Cl.: C08G 18/62, C08G 18/34, C08G 18/08, C08K 5/09, C08J 9/00

(54) **Mischung enthaltend Isocyanate sowie organische Säuren und/oder Säurederivate**
Mixture containing isocyanates as well as organic acids or acid derivatives
Mélange qui contient des isocyanates ainsi que des acides organiques ou des dérivés de ces acides

(30) Priorität: 21.08.1998 DE 19838168
(43) Veröffentlichungstag der Anmeldung: 01.03.2000
(73) Patentinhaber: BASF AKTIENGESELLSCHAFT, 67056 Ludwigshafen (DE)
(72) Erfinder: Kreyenschmidt, Martin, Dr., 67551 Worms (DE); Arlt, Andreas, 72474 Winterlingen (DE); Lorenz, Reinhard, Dr., 67117 Limburgerhof (DE); Treuling, Ulrich, Dr., 64625 Bensheim (DE)

(56) Entgegenhaltungen:
- EP-A- 0 856 551
- DE-A- 4 215 873
- US-A- 3 969 288
- US-A- 4 574 793
- US-A- 5 175 349

## Beschreibung

Die Erfindung bezieht sich auf Mischungen enthaltend
(i) mindestens ein Isocyanat sowie
(ii)mindestens eine Säure und/oder mindestens ein Säurederivat, das kein Säureanhydrid ist, bevorzugt mindestens eine Carbonsäure und/oder ein Carbonsäurederivat, das kein Carbonsäureanhydrid ist,
wobei (ii) in einer Menge von 0,01 bis 20 Gew.-%, bezogen auf das Gewicht der Mischung enthaltend ist und die Säuregruppen bzw. die derivatisierten Säuregruppen von (ii) in einem molaren Überschuß zu gegebenenfalls in der Mischung enthaltenden Aminen vorliegen und wobei als (ii) Pyromellitsäure, Bernsteinsäure, Maleinsäure, Polymaleinsäure, Glutarsäure, die auch unterschiedlichste Seitengruppen enthalten können, Adipinsäure, Dimethylolpropionsäure, Glutaminsäure und/oder Malonsäure enthaltend ist.

Des weiteren betrifft die Erfindung Verfahren zur Herstellung von Polyisocyanat-Polyadditionsprodukten durch Umsetzung von Isocyanaten mit gegenüber Isocyanaten reaktiven Verbindungen in Gegenwart von gegebenenfalls Katalysatoren, Treibmitteln, Zusatzstoffen und/oder Hilfsmitteln, derart herstellbare Polyisocyanat-Polyadditionsprodukte und die Verwendung von den erfindungsgemäßen Säuren und/oder Säurederivaten, die keine Säureanhydride sind, in Polyisocyanat-Polyadditionsprodukten.

Die Herstellung von Polyisocyanat-Polyadditionsprodukten durch Umsetzung von Polyisocyanaten mit gegenüber Isocyanaten reaktiven Verbindungen, Katalysatoren, die die Reaktion der gegenüber Isocyanaten reaktiven Stoffe mit Isocyanaten beschleunigen und gegebenenfalls Treibmittel, Zusatzstoffe, und/oder Hilfsmittel ist allgemein bekannt.

Wie auch andere Kunststoffe sind Polyisocyanat-Polyadditionsprodukte Alterungsprozessen unterworfen, die im allgemeinen mit zunehmender Zeit zu einer Verschlechterung der Gebrauchseigenschaften führen. Wesentliche Alterungseinflüsse sind beispielsweise Hydrolyse, Photooxidation und Thermooxidation, die zu Bindungsbrüchen in den Polymerketten führen. Bei Polyisocyanat-Polyadditionsprodukten, beispielsweise Polyurethanen, hat speziell die Einwirkung von Feuchtigkeit und noch verstärkt die Kombination von Feuchtigkeit und Temperatur eine hydrolytische Spaltung der Urethan- und Harnstoffbindungen zur Folge.

DE-A 42 32 420 offenbart die Verwendung von α,β-ungesättigten Estercarboxylaten, die als Katalysatoren zusätzlich zu Aminen eingesetzt wurden, zur Herstellung von Polyurethanschaumstoffen, die eine verbesserte Stauchhärte und Reißdehnung aufweisen. Die olefinischen Doppelbindungen der Estercarboxylate sollen Amine durch eine Addition an die Doppelbindung abfangen. US 4 255 526 beschreibt den Einsatz von Aminosäuren bei der Herstellung von Polyurethanschaumstoffen zur Erhöhung der Stabilität hinsichtlich Feuchtigkeit und Hitze.

Nachteilig an diesen bekannten Lehren ist, daß die eingesetzten Stoffe relativ teuer sind und zudem nach dem Stand der Technik erst bei der Herstellung der Polyisocyanat-Polyadditionsprodukte zugegeben werden.

EP-A 711 799 beschreibt die Herstellung von Polyurethanformkörpern mit einem zelligen Kern und einer verdichteten Randzone, die in Gegenwart von polymeren Carbonsäuren oder deren Derivaten hergestellt werden, wobei die Polymere der gegenüber Isocyanaten reaktiven Komponente zugegeben werden. Die Aufgabe, die dieser Schrift zugrunde lag, war der Ersatz von Fluorchlorkohlenwasserstoffen als Treibmitteln und die Herstellung von Formkörpern mit einer verbesserten Haut. Das Problem der Alterungsprozesse bei Polyurethanen wird in dieser Schrift nicht angesprochen.

Häufig werden zur Herstellung von Polyurethansystemen Katalysatoren, beispielsweise organische Amine, eingesetzt, die bei einer Herstellung von Polyurethanschäumen bevorzugt sowohl die Treibreaktion, d.h. die Umsetzung der Isocyanatgruppen mit beispielsweise Wasser zur Bildung von Kohlendioxid, als auch die Vernetzungsreaktion zwischen alkoholischen Hydroxylgruppen und Isocyanaten zur Urethangruppe beschleunigen. Um das Fließvermögen und die Durchhärtung der Reaktionsmischungen zu verbessern, kann es insbesondere bei der Herstellung von geschäumten Polyurethanen vorteilhaft sein, die Amine blockiert durch Salzbildung mit einer organischen Säure, üblicherweise Ameisen-, Essig- oder Ethylhexansäure, einzusetzen. Während der Polyisocyanat-Polyadditionsreaktion unter Einwirkung der Reaktionswärme zerfallen die thermisch reversibel blockierten Katalysatoren, das katalytisch aktive Amin wird freigesetzt und die Vernetzungs- oder Schäumreaktion setzt erst nach ausreichender Start- und Steigzeit des Reaktionsgemisches verstärkt ein. Katalysatoren dieser Art werden in DE-A 28 12 256 beschrieben.

Nachteilig an diesem Einsatz von verzögert wirkenden Katalysatoren ist die Tatsache, daß diese Katalysatoren in einem äquimolaren Verhältnis von basischem Katalysator zu blockierender Säure eingesetzt werden und nach erfolgter Katalyse der Katalysator unblockiert in dem Polyisocyanat-Polyadditionsprodukt vorliegt. Auch ist anzumerken, daß die Katalysatoren meistens mit leichtflüchtigen Säuren blockiert werden und diese während der hohen Temperaturen des Verarbeitungsprozesses aus dem System verdampfen und für eine Blockierung des Katalysators nicht mehr vorliegen. Darüber hinaus können in den überwiegenden Fällen nicht ausschließlich blockierte Katalysatoren eingesetzt werden, weil ansonsten die Reaktion zu langsam wird, so daß niemals die gesamte Menge des im System verbleibenden Katalysators blockiert wird und sehr große Anteile freien Katalysators die Urethanspaltung katalysieren können.

Aufgabe der vorliegenden Erfindung war es somit, eine Mischung zu entwickeln, die bei der Polyisocyanat-Polyadditionsreaktion zu Produkten mit einer verbesserten Stabilität gegen Alterungsprozesse, insbesondere gegen Hydrolyse, führt. Des weiteren sollte ein Stabilisator gefunden werden, der es ermöglicht, die Hydrolyse bei Polyetherurethanen zurückzudrängen und damit auch zu verhindern, daß aromatische Amine freigesetzt werden.

Diese Aufgabe konnte durch die eingangs beschriebenen Mischungen gelöst werden, die bevorzugt als Komponenten bei der Herstellung von Polyisocyanat-Polyadditionsprodukten eingesetzt werden können.

Es konnte überraschend festgestellt werden, daß ein bei einer Herstellung von Polyisocyanat-Polyadditionsprodukten anwesender aminischer Katalysator nicht nur die Polyadditionsreaktion, d.h. die Bildung von Urethangruppen beschleunigt, sondern nach erfolgter Polyadditionsreaktion auch und verstärkt die Spaltung der Urethanbindungen katalysiert. Dies gilt insbesondere bei einer Lagerung der Polyisocyanat-Produkten unter feuchten und warmen Bedingungen und wird durch die Tatsache verstärkt, daß der Katalysator nach der Herstellung der Polyisocyanat-Polyadditionsprodukte nicht mehr blockiert und damit aktiv vorliegt. Die Spaltung der Urethanbindung führt nicht nur zu einer Verschlechterung der Eigenschaften der Polyisocyanat-Polyadditionsprodukte, sondern kann auch zur Bildung von Aminen führen, die unerwünscht sind.

Aufgrund des erfindungsgemäßen Einsatzes von (ii) mindestens einer Säure und/oder einem Säurederivat, das kein Säureanhydrid ist, erreicht man, daß die Säuren die gegebenenfalls in den Produkten enthaltenen aminischen Katalysatoren beispielsweise durch Protonierung blockieren und somit eine Rückspaltung der Urethan- und/oder Harnstoffbindungen verhindert wird.

Die Säuren und/oder Säurederivate bzw. die erfindungsgemäßen Mischungen werden somit in Polyisocyanat-Polyadditionsprodukten zur Stabilisierung der Polyisocyanat-Polyadditionsprodukte, insbesondere Polyurethane, gegen eine Spaltung der Urethanund Harnstoffbindungen verwendet, beispielsweise durch Blockierung von aminischen Katalysatoren durch Protonierung der Katalysatoren. Zudem können die Säuren in Polyisocyanat-Polyadditionsprodukten zur Blockierung der Aminogruppen in den Polyisocyanat-Polyadditionsprodukten Verwendung finden.

Die Diffusion von Aminen aus den Polyisocyanat-Polyadditionsprodukten und die Rückspaltung der Urethanbindung beispielsweise durch in den Polyisocyanat-Polyadditionsprodukten vorhandene aminische Katalysatoren kann damit erfindungsgemäß vermindert kann.

Überraschend konnte festgestellt werden, daß (ii) in Mischung mit Isocyanaten bei Raumtemperatur, d.h. 25°C stabil sind und die Isocyanatgruppen nicht oder nicht wesentlich mit (ii) reagieren.

Die erfindungsgemäßen säuren und/oder Säurederivate, die keine Säureanhydride sind, bzw. Mischungen kann man bevorzugt zur Herstellung von Polyisocyanat-Polyadditionsprodukten nach allgemein bekannten Verfahren durch Umsetzung von Isocyanaten mit gegenüber Isocyanaten reaktiven Verbindungen in Gegenwart von gegebenenfalls Katalysatoren, Treibmitteln, Zusatzstoffen und/oder Hilfsmitteln einsetzen. Als Polyisocyanat-Polyadditionsprodukte können beispielsweise kompakte oder zellige, beispielsweise mikrozellige, weiche, halbharte oder harte Polyurethanschäume, thermoplastische Polyurethane, oder Polyurethanelastomere nach üblichen Verfahren unter Verwendung der erfindungsgemäßen Mischungen hergestellt werden. Bevorzugt setzt man die erfindungsgemäßen Mischungen in Verfahren zur Herstellung von Polyurethanelastomeren oder geschäumten Polyisocyanat-Polyadditionsprodukten, insbesondere Polyurethanweichschaumstoffen, durch Umsetzung von Isocyanaten mit gegenüber Isocyanaten reaktiven Verbindungen in Gegenwart von Katalysatoren, Treibmitteln, Zusatzstoffen und/oder Hilfsmitteln ein.

Als Isocyanate kommen in den erfindungsgemäßen Mischungen beispielsweise nachfolgend beschriebene Verbindungen in Frage:

Als Isocyanate können die an sich bekannten aliphatischen, cycloaliphatischen, araliphatischen und vorzugsweise aromatischen organischen Isocyanate, bevorzugt mehrfunktionellen, besonders bevorzugt Diisocyanate, eingesetzt werden.

Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylen-diisocyanat-1,4,2-Methylpentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4-und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, aromatische Diund Polyisocyanate, wie z.B. 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Naphthalin-1,5-diisocyanat (NDI), Mischungen aus 4,4'- und 2,4'-Diphenylmethan-diisocyanaten, Mischungen aus NDI und 4,4'- und/oder 2,4'-Diphenylmethan-diisocyanaten, 3,3'-Dimethyl-4,4'-diisocyanatodiphenyl (TODI), Mischungen aus TODI und 4,4'- und/oder 2,4'-Diphenylmethan-diisocyanaten, Polyphenyl-polymethylen-polyisocyanate, Mischungen aus 4,4'-, 2,4'und 2,2'-Diphenylmethan-diisocyanaten und Polyphenylpolymethylenpolyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, modifiziertes 4,4'-Diphenylmethan-diisocyanat, modifizierte 4,4'- und 2,4'-Diphenylmethan-diisocyanatmischungen, modifiziertes NDI, modifiziertes TODI, modifiziertes Roh-MDI und/oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus beispielsweise Polyester- und/oder vorzugsweise Polyetherpolyolen und 4,4'-Diphenylmethan-diisocyanat, Mischungen aus 2,4'- und 4,4'-Diphenylmethan-diisocyanat, NDI, TODI, Mischungen aus NDI und Isomeren des MDI, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethan-diisocyanat, NDI, TODI und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenyl-methan-diisocyanat, NDI, TODI, Roh-MDI, 2,4- und/oder 2,6-Toluylen-diisocyanat gegebenenfalls gemischt werden.

Bevorzugt werden als Isocyanate in den erfindungsgemäßen Mischungen bzw. Verfahren 4,4'-, 2,4'- und/oder 2,2'-Diphenylmethandiisocyanat, 2,4- und/oder 2,6-Toluylendiisocyanat, NDI, Hexamethylendiisocyanat und/oder Isophorondiisocyanat Einsatz, wobei diese Isocyanate sowohl in beliebigen Mischungen als auch wie bereits beschrieben modifiziert eingesetzt werden können. Prinzipiell ist jedoch die Wirksamkeit von (ii) unabhängig vom eingesetzten Isocyanat.

Als gegenüber Isocyanaten reaktive Verbindungen mit üblicherweise mindestens zwei reaktiven Wasserstoffatomen, üblicherweise Hydroxyl- und/oder Aminogruppen, werden zweckmäßigerweise solche mit einer Funktionalität von 2 bis 8, vorzugsweise 2 bis 6, und einem Molekulargewicht von üblicherweise 60 bis 10000, verwendet. Bewährt haben sich z.B. Polyether-polyamine und/oder vorzugsweise Polyole ausgewählt aus der Gruppe der Polyetherpolyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole, die nach bekannten Verfahren hergestellt werden können.

Die Polyester-polyole besitzen vorzugsweise eine Funktionalität von 2 bis 4, insbesondere 2 bis 3, und ein Molekulargewicht von üblicherweise 500 bis 3000, vorzugsweise 1200 bis 3000 und insbesondere 1800 bis 2500.

Die Polyether-polyole, besitzen eine Funktionalität von vorzugsweise 2 bis 6 und üblicherweise Molekulargewichte von 500 bis 8000.

Als Polyether-polyole eignen sich beispielsweise auch polymermodifizierte Polyether-polyole, vorzugsweise Pfropf-polyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril hergestellt werden können.

Die Polyether-polyole können ebenso wie die Polyester-polyole einzeln oder in Form von Mischungen verwendet werden. Ferner können sie mit den Pfropf-polyether-polyolen oder Polyesterpolyolen sowie hydroxylgruppenhaltigen Polyesteramiden, Polyacetalen, Polycarbonaten und/oder Polyether-polyaminen gemischt werden.

Als Polyolkomponenten werden dabei für Polyurethanhartschaumstoffe, die gegebenenfalls Isocyanuratstrukturen aufweisen können, hochfunktionelle Polyole, insbesondere Polyetherpolyole auf Basis hochfunktioneller Alkohole, Zuckeralkohole und/oder Saccharide als Startermoleküle, für flexible Schäume 2- und/oder 3-funktionelle Polyether- und/oder Polyesterpolyole auf Basis Glyzerin und/oder Trimethylolpropan und/oder Glykolen als Startermoleküle bzw. zu veresternde Alkohole eingesetzt. Die Herstellung der Polyetherpolyole erfolgt dabei nach einer bekannten Technologie. Geeignete Alkylenoxide zur Herstellung der Polyole sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen. Zur Herstellung von thermoplastischen Polyurethanen verwendet man bevorzugt Polyole mit einer Funktionalität von 2 bis 2,2 und keine Vernetzungsmittel.

Als gegenüber Isocyanaten reaktive Verbindungen können des weiteren Kettenverlängerungs- und/oder Vernetzungsmittel verwendet werden. Beispielsweise zur Modifizierung der mechanischen Eigenschaften der mit diesen Substanzen hergestellten Polyisocyanat-Polyadditionsprodukte, z.B. der Härte, kann sich der Zusatz von Kettenverlängerungsmitteln, Vernetzungsmitteln oder gegebenenfalls auch Gemischen davon als vorteilhaft erweisen.
Als Kettenverlängerungs- und/oder Vernetzungsmittel können Wasser, Diole und/oder Triole mit Molekulargewichten von 60 bis <500, vorzugsweise von 60 bis 300 verwendet werden. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und Diolen und/oder Triolen als Startermoleküle.

Sofern zur Herstellung der Polyisocyanat-Polyadditionsprodukte Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der gegenüber den Isocyanaten reaktiven Verbindungen zum Einsatz, wobei thermoplastische Polyurethane bevorzugt ohne Vernetzungsmittel hergestellt werden.

Als (ii) werden folgende Verbindungen eingesetzt:
Pyromellitsäure, Bernsteinsäure, Maleinsäure, Polymaleinsäure, Glutarsäure, die auch unterschiedlichste Seitengruppen enthalten können, Adipinsäure, Dimethylolpropionsäure, Glutaminsäure und/oder Malonsäure.

Besonders bevorzugt sind im allgemeinen solche Säuren, die sich gut in (i) lösen.

Die erfindungsgemäßen Verbindungen (ii) können in der Mischung zumindest teilweise deprotoniert und als Salz mit den gegebenenfalls enthaltenen, zumindest teilweise protonierten Aminen vorliegen, wobei aufgrund des molaren Überschußes an (ii) zumindest ein Teil von (ii) frei vorliegt. Durch eine allgemein bekannte Wärmebehandlung bei der Herstellung der Polyisocyanat-Polyadditionsprodukte bzw. durch die Reaktionswärme bei dieser Herstellung können die organischen Amine zumindest teilweise freigesetzt werden und ihre katalytische Aktivität entfalten, werden aber bevorzugt nach der Katalyse wieder von den Säuren blockiert.

Als gegebenenfalls in den Mischungen vorliegende Amine sind beispielsweise folgende Verbindungen zu nennen:

Organische Amine, beispielsweise Triethylamin, Triethylendiamin, Tributylamin, Dimethylbenzylamin, N,N,N',N'-Tetramethylethylendiamin, N,N,N',N'-Tetramethyl-butandiamin, N,N,N',N'-Tetramethylhexan-1,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)-ether, N-Ethylmorpholin, N-Methylmorpholin, N-Cyclohexylmorpholin, 2-Dimethylamino-ethoxy-ethanol, Dimethylethanolamin, Tetramethylhexamethylendiamin, Dimethylamino-N-methyl-ethanolamin, N-Methylimidazol, N-Formyl-N,N'dimethylbutylendiamin, N-Dimethylaminoethylmorpholin, 3,3'-Bis-dimethylamino-di-n-propylamin und/oder 2,2'-Dipiparazin-diisopropylether, Dimethylpiparazin, N,N'-Bis-(3-aminopropyl)ethylendiamin und/oder Tris-(N,N-dimethylaminopropyl)-s-hexahydrotriazin, oder Mischungen enthaltend mindestens zwei der genannten Amine, wobei auch höhermolekulare tertiäre Amine, wie sie beispielsweise in DE-A 28 12 256 beschrieben sind, möglich sind. Bevorzugt können tertiäre aliphatische und/oder cycloaliphatische Amine in den Mischungen in den Mischungen enthaltend sein, besonders bevorzugt Triethylendiamin.

Der molare Überschuß der Säuregruppen bzw. der derivatisierten Säuregruppen zu gegebenenfalls in den erfindungsgemäßen Mischungen enthaltenen Aminen beträgt bevorzugt mindestens 2:1, besonders bevorzugt mindestens 10:1, insbesondere mindestens 100:1. Selbst nach einer teilweisen Umsetzung der (derivatisierten) Carbonsäuregruppen von (ii) mit den Isocyanatgruppen von (i) liegt in der erfindungsgemäßen Mischung bevorzugt eine molarer Überschuß von den (derivatisierten) Säuregruppen von (ii) gegenüber den gegebenenfalls enthaltenen Aminen vor.

Zusätzlich zu (i) und (ii) können die Mischungen Treibmittel, Zusatzstoffe, Hilfsmittel und/oder Katalysatoren, beispielsweise solche, die die Reaktion der gegenüber Isocyanaten reaktiven Stoffe mit Isocyanaten, beispielsweise die Treib- und/oder Vernetzungsreaktion, beschleunigen, enthalten.

Als Treibmittel können gegebenenfalls, bevorzugt zur Herstellung von geschäumten Polyurethanen, allgemein bekannte Treibmittel, wie z.B. Stoffe, die einen Siedepunkt unter Normaldruck im Bereich von -40°C bis 120°C besitzen, Gase und/oder feste Treibmittel und/oder Wasser in üblichen Mengen eingesetzt werden, beispielsweise Kohlendioxid, Alkane und oder Cycloalkane wie beispielsweise Isobutan, Propan, n- oder iso-Butan, n-Pentan und Cyclopentan, Ether wie beispielsweise Diethylether, Methylisobutylether und Dimethylether, Stickstoff, Sauerstoff, Helium, Argon, Lachgas, halogenierte Kohlenwasserstoffe und/oder teilhalogenierte Kohlenwasserstoffe wie beispielsweise Trifluormethan, Monochlortrifluorethan, Difluorethan, Pentafluorethan, Tetrafluorethan oder Mischungen, die mindestens zwei der beispielhaft genannten Treibmittel enthalten.

Als Hilfsmittel und/oder Zusatzstoffe seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen genannt.

Als Katalysatoren kommen allgemein übliche Verbindungen in Betracht, beispielsweise organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Des weiteren können als Katalysatoren für diesen Zweck übliche organische Amine eingesetzt werden, beispielsweise Triethylamin, Triethylendiamin, Tributylamin, Dimethylbenzylamin, N,N,N',N'-Tetramethylethylendiamin, N,N,N',N'-Tetramethyl-butandiamin, N,N,N',N'-Tetramethylhexan-1,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)-ether, N-Ethylmorpholin, N-Methylmorpholin, N-Cyclohexylmorpholin, 2-Dimethylamino-ethoxy-ethanol, Dimethylethanolamin, Tetramethylhexamethylendiamin, Dimethylamino-N-methyl-ethanolamin, N-Methylimidazol, N-Formyl-N,N'-dimethylbutylendiamin, N-Dimethylaminoethylmorpholin, 3,3'-Bis-dimethylamino-di-n-propylamin und/oder 2,2'-Dipiparazindiisopropylether, Dimethylpiparazin, N,N'-Bis-(3-aminopropyl)-ethylendiamin und/oder Tris-(N,N-dimethylaminopropyl)-s-hexahydrotriazin, oder Mischungen enthaltend mindestens zwei der genannten Amine, wobei auch höhermolekulare tertiäre Amine, wie sie beispielsweise in DE-A 28 12 256 beschrieben sind, möglich sind. Bevorzugt können tertiäre aliphatische und/oder cycloaliphatische Amine in den Mischungen in den Mischungen enthalten sein, besonders bevorzugt Triethylendiamin.

Die erfindungsgemäßen Mischungen werden bevorzugt zur Herstellung der Polyisocyanat-Polyadditionsprodukte, beispielsweise kompakten oder zelligen, beispielsweise mikrozelligen, thermoplastischen oder vernetzten, harten, halbharten oder weichen, elastischen oder unelastischen Polyurethanen eingesetzt.

Die Ausgangsstoffe für die Herstellung der Polyisocyanat-Polyadditionsprodukte sind beispielhaft bereits beschrieben worden. Üblicherweise werden die organischen Polyisocyanate und die gegenüber Isocyanaten reaktiven Verbindungen mit einem Molekulargewicht von 60 bis 10000 g/mol in solchen Mengen zur Umsetzung gebracht, daß das Äquivalenzverhältnis von NCO-Gruppen der Polyisocyanate zur Summe der reaktiven Wasserstoffatome der gegenüber Isocyanaten reaktiven Verbindungen 0,5 bis 5 : 1 vorzugsweise 0,9 bis 3 : 1 und insbesondere 0,95 bis 2 : 1 beträgt.

Gegebenenfalls kann es von Vorteil sein, daß die Polyurethane zumindest teilweise Isocyanuratgruppen gebunden enthalten. In diesen Fällen kann ein Verhältnis von NCO-Gruppen der Polyisocyanate zur Summe der reaktiven Wasserstoffatome von 1,5 bis 60 : 1, vorzugsweise 1,5 bis 8 : 1 bevorzugt gewählt werden.

Die Polyisocyanat-Polyadditionsprodukte können beispielsweise nach dem one-shot Verfahren, oder dem bekannten Prepolymer-Verfahren hergestellt werden, beispielsweise mit Hilfe der Hochdruck- oder Niederdruck-Technik in offenen oder geschlossenen Formwerkzeugen, Reaktionsextrudern oder Bandanlagen.
Als vorteilhaft hat es sich erwiesen, die Polyisocyanat-Polyadditionsprodukte nach dem Zweikomponentenverfahren herzustellen und die gegenüber Isocyanaten reaktiven Verbindungen und gegebenenfalls die Katalysatoren, Treibmittel und/oder Hilfsund/oder Zusatzstoffe in der A-Komponente zu vereinigen und als B-Komponente die Isocyanate und Katalysatoren und/oder Treibmittel einzusetzen. Die Komponente (ii) wird erfindungsgemäß der B-Komponente zugegeben.

In dem erfindungsgemäßen Verfahren zur Herstellung der Polyisocyanat-Polyadditionsprodukte setzt man (ii) bevorzugt in einer Menge von 0,1 bis 20 Gew.-%, besonders bevorzugt 0,1 bis 6 Gew.-%, bezogen auf das Gewicht der Summe von (ii) und der eingesetzten Isocyanate, ein.

Die Erfindung soll anhand der folgenden Beispiele dargestellt werden.

Polyurethanweichschaumstoffe wurden mit der folgenden Rezeptur hergestellt, wobei in den einzelnen Beispielen die in der Tabelle 1 angegebenen Zusätze an Carbonsäuren der Isocyanatkomponente (B-Komponente) vor dem Vermischen mit der Polykomponente (A-Komponente) zugesetzt wurden. Zum Vergleich wurden Schaumstoffe ohne Zugabe von Säuren hergestellt.

### A-Komponente:

| | |
|---|---|
| 97 Gew.-Teile | eines Polyetherpolyalkohols mit einer Hydroxylzahl von 28 mg KOH/g, einer mittleren Funktionalität von 2,3 hergestellt mit einem Ethylenoxid zu Propylenoxid-Verhältnis von 14 : 86, |
| | |
| 3 Gew.-Teile | eines Polyetherpolyalkohols mit einer Hydroxylzahl von 42 mg KOH/g, einer mittleren Funktionalität von 3 hergestellt mit einem Ethylenoxid zu Propylenoxid-Verhältnis von 30 : 70, |
| | |
| 3,31 Gew.-Teile | Wasser, |
| | |
| 0,8 Gew.-Teile | Aminopropylimidazol, |
| | |
| 0,6 Gew.-Teile | Dimethylaminodiglykol und |
| | |
| 0,5 Gew.-Teile | eines Stabilisators (Tegostab® B 8631, Goldschmidt) |

### B-Komponente:

Mischung aus einem Polymer-MDI (Gewichtsanteil 50 %) und einem difunktionellem MDI-Gemisch (Gewichtsanteil 50 %) mit einem NCO-Gehalt von 32,7 %.

**Tabelle 1**

| Beispiel | Verbindung (ii), Gew.-% in B-Komponente |
|---|---|
| 1 | Adipinsäure, 1,0 Gew.-% |
| 2 | Dimethylolpropionsäure, 2,0 Gew.-% |
| 3 | Glutaminsäure, 2,0 Gew.-% |

Die Herstellung der Weichschaumstoffe erfolgte derart, daß man 750 g A-Komponente bei Raumtemperatur in einem 5 l Eimer bei einer Kennzahl von 100 mit 393 g B-Komponente mit einem Rührwerk vermischte, die aufschäumende Mischung bei Erreichen der Startzeit in eine auf 53 °C temperierte Aluminiumform mit den Abmessungen 40x40x10 cm goß, die Form verschloß und nach Erreichen der Gelzeit den Weichschaum entformte.

Die erfindungsgemäß hergestellten Polyurethanschaumstoffe hinsichtlich ihrer mechanischen Eigenschaften direkt nach der Herstellung sowie nach einer Lagerung von 3 Tagen bei 90 °C und 90 % rel. Luftfeuchtigkeit im Vergleich zu Weichschaumstoffen, die mit den angegebenen A- und B-Komponenten ohne Zusatz von Verbindungen gemäß Tabelle 1 hergestellt worden waren, untersucht. Die hervorragenden Eigenschaften, insbesondere die deutlich gesteigerte Stabilität der erfindungsgemäßen Schaumstoffe sind der Tabelle 2 zu entnehmen.

**Tabelle 2**

| Beispiel | DVR | RPE | Stauchhärte | Zugfestigkeit | Dehnung |
|---|---|---|---|---|---|
| Vergleich o.L. | 4,1 | 68,5 | 5,1 | 95 | 96 |
| Vergleich m.L. | 15,6 | 49,3 | 3,8 | 59 | 105 |
| 1 o.L. | 4,3 | 69,3 | 5,4 | 94 | 94 |
| 1 m.L. | 6,4 | 62,2 | 4,7 | 101 | 95 |
| 2 o.L. | 5,7 | 68,2 | 6,0 | 87 | 75 |
| 2 m.L. | 8,9 | 62,3 | 4,7 | 73 | 79 |
| 3 m.L. | 4,7 | 61,3 | 5,3 | 93 | 94 |
| o.L.: ohne Lagerung m.L.: mit Lagerung DVR: Druckverformungsrest, angegeben in [%], gemessen nach DIN 53572 RPE: Rückprallelastizität, angegeben in [%], gemessen nach DIN 53573 Stauchärte: angegeben in [kPa], gemessen nach DIN 53577 bei 40 % Verformung Zugfestigkeit: angegeben in [kPa], gemessen nach DIN 53571 Dehnung: angegeben in [%], gemessen nach DIN 53571 | | | | | |

## Patentansprüche

1. Mischung enthaltend
(i) mindestens ein Isocyanat sowie
(ii)mindestens eine Säure und/oder mindestens ein Säurederivat, das kein Säureanhydrid ist,
wobei (ii) in einer Menge von 0,01 bis 20 Gew.-%, bezogen auf das Gewicht der Mischung enthaltend ist und die Säuregruppen bzw. derivatisierten Säuregruppen von (ii) in einem molaren Überschuß zu gegebenenfalls in der Mischung enthaltenden Aminen vorliegen, und wobei als (ii) Pyromellitsäure, Bernsteinsäure, Maleinsäure, Polymaleinsäure, Glutarsäure, die auch unterschiedlichste Seitengruppen enthalten können, Adipinsäure, Dimethylolpropionsäure, Glutaminsäure und/oder Malonsäure enthaltend ist.

2. Mischung nach Anspruch 1, **dadurch gekennzeichnet, daß** (ii) in einer Menge von 0,1 bis 6 Gew.-%, bezogen auf das Gewicht der Mischung enthaltend ist.

3. Verfahren zur Herstellung von Polyisocyanat-Polyadditionsprodukten durch Umsetzung von Isocyanaten mit gegenüber Isocyanaten reaktiven Verbindungen in Gegenwart von gegebenenfalls Katalysatoren, Treibmitteln, Zusatzstoffen und/oder Hilfsmitteln, **dadurch gekennzeichnet, daß** man die Umsetzung in Gegenwart von Mischungen nach Anspruch 1 durchführt.

4. Verfahren zur Herstellung von geschäumten Polyisocyanat-Polyadditionsprodukten durch Umsetzung von Isocyanaten mit gegenüber Isocyanaten reaktiven Verbindungen in Gegenwart von Katalysatoren, Treibmitteln, Zusatzstoffen und/oder Hilfsmitteln, **dadurch gekennzeichnet, daß** man die Umsetzung in Gegenwart von Mischungen nach Anspruch 1 durchführt.

## Claims

1. A mixture comprising
(i) at least one isocyanate and
(ii) at least one acid and/or at least one acid derivative which is not an acid anhydride,
wherein (ii) is present in an amount of from 0.01 to 20% by weight, based on the weight of the mixture, and the acid groups or the derivatives of acid groups of (ii) are present in a molar excess over any amines present in the mixture, and (ii) comprises pyromellitic acid, succinic acid, maleic acid, polymaleic acid, glutaric acid, each of which may also contain various side groups, adipic acid, dimethylolpropionic acid, glutamic acid and/or malonic acid.

2. A mixture as claimed in claim 1, wherein (ii) is present in an amount of from 0.1 to 6% by weight, based on the weight of the mixture.

3. A process for producing polyisocyanate polyaddition products by reacting isocyanates with compounds which are reactive toward isocyanates in the presence or absence of catalysts, blowing agents, additives and/or auxiliaries, wherein the reaction is carried out in the presence of mixtures as claimed in claim 1.

4. A process for producing foamed polyisocyanate polyaddition products by reacting isocyanates with compounds which are reactive toward isocyanates in the presence of catalysts, blowing agents, additives and/or auxiliaries, wherein the reaction is carried out in the presence of mixtures as claimed in claim 1.

## Revendications

1. Mélange contenant
(i) au moins un isocyanate et
(ii) au moins un acide et/ou au moins un dérivé d'acide qui n'est pas un anhydride d'acide,
dans lequel (ii) est contenu en une quantité de 0,01 à 20 % en poids, rapportés au poids du mélange, et les groupes acides, respectivement les groupes acides dérivés de (ii) sont présents en un excès molaire vis-à-vis d'amines éventuellement contenues dans le mélange, et dans lequel le mélange contient à titre de (ii) de l'acide pyromellitique, de l'acide succinique, de l'acide maléique, de l'acide polymaléique, de l'acide glutarique, lesdits acides pouvant également contenir des groupes latéraux les plus divers, de l'acide adipique, de l'acide diméthylolpropionique, de l'acide glutamique et/ou de l'acide malonique.

2. Mélange selon la revendication 1, **caractérisé en ce que** (ii) est contenu en une quantité de 0,1 à 6 % en poids, rapportés au poids du mélange.

3. Procédé pour la préparation de produits de polyaddition de polyisocyanates par mise en réaction d'isocyanates avec des composés réactifs vis-à-vis d'isocyanates en présence le cas échéant de catalyseurs, d'agents moussants, d'additifs et/ou d'adjuvants, **caractérisé en ce qu'**on effectue la mise en réaction en présence de mélanges selon la revendication 1.

4. Procédé pour la préparation de produits de polyaddition de polyisocyanates transformés en mousse par mise en réaction d'isocyanates avec des composés réactifs vis-à-vis d'isocyanates en présence de catalyseurs, d'agents moussants, d'additifs et/ou d'adjuvants, **caractérisé en ce qu'**on effectue la mise en réaction en présence de mélanges selon la revendication 1.
